# EUROPÄISCHE PATENTSCHRIFT

(11) **EP 0 345 539 B1**
(45) Veröffentlichungstag und Bekanntmachung des Hinweises auf die Patenterteilung: **29.09.1993**
(21) Anmeldenummer: 89109364.3
(22) Anmeldetag: 24.05.1989
(51) Int. Cl.: H02P 7/638

(54) **Schaltanordnung zur Drehzahlsteuerung eines Reihenschlussmotors mit Drehmomentabschaltung**
Speed control circuit of a series-wound motor using torque braking
Circuit de commande de la vitesse d'un moteur en série avec déclenchement de couple

(30) Priorität: 04.06.1988 DE 3819166
(43) Veröffentlichungstag der Anmeldung: 13.12.1989
(73) Patentinhaber: Marquardt GmbH, 78604 Rietheim-Weilheim (DE)
(72) Erfinder: Kühnemundt, Gerhard, D-7206 Emmingen-Liptingen 2 (DE)
(74) Vertreter: Patentanwälte Eisele, Otten & Roth

(56) Entgegenhaltungen:
- EP-A- 0 119 142
- EP-A- 0 135 613
- EP-A- 0 187 353
- DE-A- 3 311 771
- DE-C- 3 325 698

## Beschreibung

Die Erfindung betrifft eine Schaltanordnung zur Drehzahlsteuerung eines Reihenschlußmotors für ein handgeführtes Elektrowerkzeug, insbesondere einen Elektroschrauber gemäß dem Oberbegriffe des Anspruchs 1.

Die Drehzahl der Motoren marktgängiger Elektroschrauber dieser Art wird sehr häufig mit einem Triac als sogenannte Vollwellen-Leistungssteuerung ausgeführt. Dabei sind wesentliche Teile der Zündschaltung in einem integrierten Schaltkreis enthalten, einem sogenannten Phasenanschnitt-IC. Die Vorrichtung zur Drehmomentabschaltung ist prinzipiell in der Weise ausgebildet, daß eine zum aufgenommenen Motorstrom proportionale Spannung mit einer am Stellorgan für den Abschaltwert vorwählbaren Spannung verglichen wird und wenn dann der aufgenommene Motorstrom, der ein Abbild des abgegebenen Drehmoments ist, einen bestimmten Wert überschreitet, erfolgt die Abschaltung durch Sperrung des Triacs. Es handelt sich also im Prinzip um eine ÜberstromAbschalteinrichtung, wie sie ansonsten auch zu Zwecken des Motorschutzes Verwendung findet.

Aus der DE-C-2 326 027 ist ein Kraftschrauber mit Drehmomentbegrenzung bekannt, bei dem das momentane Drehmoment in ähnlicher Weise erfaßt und der Motorstrom mittels einer Relaisschaltung unterbrochen wird. Hier ist jedoch kein Stellorgan für die Drehzahl vorgesehen, vielmehr läuft dieser bekannte Kraftschrauber mit unveränderbar hoher Drehzahl bis zu seinem Abschaltpunkt.

Bei einem anderen Kraftschrauber mit Drehmomentbegrenzung nach der EP-A-0 187 353 wird mittels eines Potentiometers die dem Motor zur Verfügung gestellte Spannung eingestellt. Damit liegt sowohl die Leerlaufdrehzahl als auch das maximale Drehmoment im Stillstand fest. Man läßt den Motor jedesmal zum Stillstand kommen und schaltet dann von Hand ab oder erfaßt den Motorstillstand mittels eines geeigneten Drehzahlgebers und schaltet mit dessen Signal automatisch ab. Hierbei kann jedoch die Fähigkeit des Motors, schnell hohe Drehzahlen zu erreichen, nicht ausgenutzt werden.

Nach einem repräsentativen Beispiel bei einem empfindlichen Elektroschrauber der einleitend bezeichneten Art wird eine Abschaltung schon beim 1,2- bis 1,5fachen des Leerlaufstromes bei voller Drehzahl verlangt. Andererseits sind aber solche Motoren so ausgelegt, daß der mittlere erforderliche Motorstrom zum Hochlaufen aus dem Stillstand bzw. aus kleiner Drehzahl auf die volle Drehzahl das 3- bis 4fache des Leerlaufstromes beträgt. Somit ist es unvermeidlich, daß bei einem kleinen eingestellten Abschaltwert die Einrichtung zur Drehmomentabschaltung in Funktion tritt, wenn man den Motor schnell hochlaufen läßt.

Das aber kann zu Fehlbedienungen führen und ist auf jeden Fall unerwünscht. Die unbeabsichtigte Abschaltung könnte zwar dadurch vermieden werden, daß man die Drehzahl nur äußerst langsam steigert. Dies wird aber als lästig empfunden.

Der Erfindung liegt die Aufgabe zugrunde, eine Schaltanordnung der einleitend bezeichneten Art zur Drehzahlsteuerung eines Reihenschlußmotors mit Drehmomentabschaltung vorzuschlagen, die eine vereinfachte Bedienung der in Rede stehenden handgeführten Elektrowerkzeuge ermöglicht und deren Fähigkeit, schnell hohe Drehzahlen zu erreichen, voll ausnutzt.

Diese Aufgabe wird erfindungsgemäß dadurch gelöst, daß in Abhängigkeit von der Schnelligkeit einer am Stellorgan gewählten Drehzahlerhöhung der, z. B. an einem Potentiometer, voreingestellte Abschaltwert selbsttätig solange erhöht wird, wie der Motor zum Hochlaufen einen überhöhten Strom aufnimmt. Die Abschalteinrichtung wird also kurzzeitig unempfindlich bzw. unwirksam gemacht, und zwar gerade solange und in dem Ausmaß, wie der Motor zum Hochlaufen einen überhöhten Strom aufnimmt. Prinzipiell eignet sich die Erfindung sowohl für den Fall des Hochlaufs aus dem Stand auf die voreingestellte Drehzahl als auch für den Fall einer Erhöhung des Drehzahleinstellwertes am Stellorgan mit entsprechender Reaktion des Motors darauf. Eine relativ langsame Veränderung der Drehzahleinstellung hat nur eine kleine Erhöhung des Abschaltwertes zur Folge. Ferner hat die erfindungsgemäße Anordnung eine geringere Wirkung bei größeren Einstellungen des Abschaltwertes, beispielsweise auf das 2- bis 3fache des Leerlaufstromes, wo also die Gefahr des unerwünschten Abschaltens von Anfang an kleiner ist. Somit paßt sich die Anordnung, die auch als Auslösesperre bezeichnet werden kann, dynamisch an die Erfordernisse an.

Als zweckmäßige Ausführungsform der Erfindung wird vorgeschlagen, daß der Abschaltwert mit Hilfe eines Differenziergliedes verändert wird, welches ein die Drehzahl bestimmendes Steuersignal differenziert. Die Anordnung kann insbesondere so getroffen sein, daß mit Hilfe des Differenziergliedes aus dem die Drehzahl bestimmenden Steuersignal ein Korrektursignal erzeugt wird, welches dem den Abschaltwert bestimmenden Signal im Sinne einer Erhöhung überlagert wird, wobei dieses voreinstellbare Signal eine Spannung oder ein Strom sein kann. Die Überlagerung kann durch direkte Kopplung oder über Transistoren, Komparatoren (integrierte Verstärker) oder dgl. erfolgen.

Das Differenzierglied kann an den Steuereingang oder den Ausgang eines Drehzahlreglers angeschlossen werden, der die Motordrehzahl bestimmt.

Als Alternative zur Veränderung des Abschaltwertes ist es auch möglich, daß mit Hilfe des Differenziergliedes das Proportionalitätsverhältnis zwischen dem Motorstrom und dem ihn abbildenden, in der Abschalteinrichtung verwendeten Signal im Sinne der Vermeidung einer Abschaltung beim Hochlauf verändert wird.

Um das Differenzierglied nur in einer Richtung, nämlich bei Drehzahlerhöhung, wirksam werden zu lassen, wird vorgeschlagen, daß Dioden vorgesehen sind, welche die Wirkung des Differenziergliedes bei einer Drehzahlverminderung unterdrücken.

Unter Umständen kann es erforderlich sein, die Wirkungsrichtung des Differenziergliedes umzukehren. Dies kann z. B. mittels eines als Inverter geschalteten Transistors geschehen.

Zwei Ausführungsbeispiele der Erfindung werden nachfolgend anhand der Zeichnung erläutert. Im einzelnen zeigt
- Fig. 1: einen schematischen Schaltplan einer Anordnung zur Drehzahleinstellung und Drehmomentabschaltung bei einem Elektroschrauber und
- Fig. 2: einen ähnlichen Schaltplan zum gleichen Zweck, bei dem ein weiterentwickelter integrierter Schaltkreis verwendet ist.

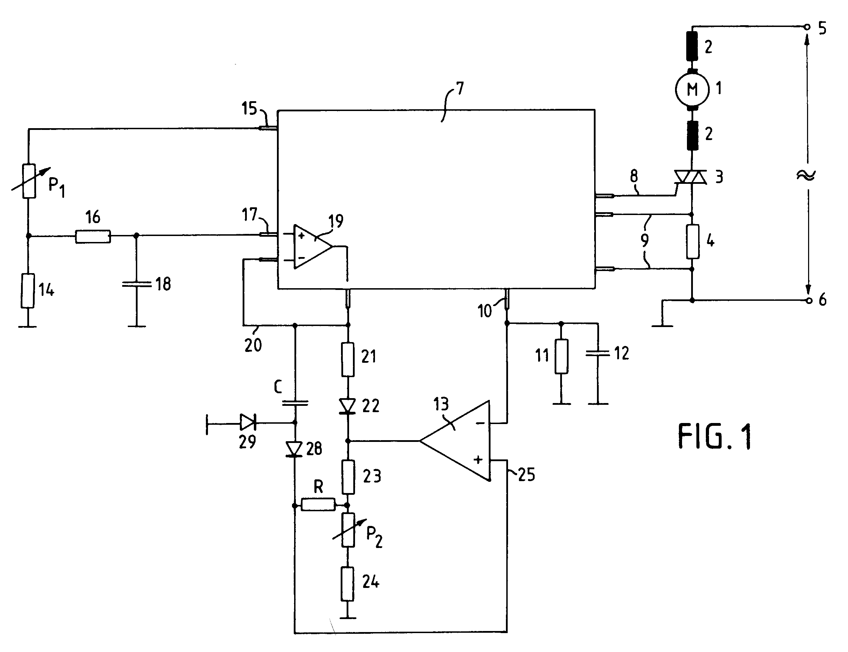

Nach Fig. 1 ist ein Reihenschlußmotor, bestehend aus einem Anker 1 und zwei Feldwicklungen 2 in Reihe mit einem Triac 3 und einem Widerstand 4 mit den Klemmen 5 und 6 an die Netzspannung angeschlossen. Zentrales Schaltelement, u. a. zur Phasenanschnitt-Steuerung und Drehzahlregelung des Motors ist ein integrierter Schaltkreis 7, der nur schematisch und mit einem Teil seiner Pins (Anschlüsse) wiedergegeben ist. Er steuert den Triac 3 über eine Leitung 8 und erfaßt über zwei Leitungen 9 den motorstromabhängigen Spannungsabfall an dem Widerstand 4. Dementsprechend wird ein zu dem aufgenommenen Motorstrom proportionaler Strom am Pin 10 des integrierten Schaltkreises 7 zur Verfügung gestellt. Er fließt über die Parallelschaltung eines Widerstandes 11 und eines Kondensators 12 nach Masse ab und bestimmt das Eingangspotential an einem Eingang eines Komparators 13. Dieser ist ein aktives Bauteil, dessen Stromversorgung nicht gezeigt ist.

Ein Potentiometer P₁ dient als Stellorgan für die Drehzahl. Es bildet mit einem Widerstand 14 einen Spannungsteiler und wird von einer am Pin 15 des integrierten Schaltkreises anstehenden Referenzspannung gespeist. Der Abgriff des Spannungsteilers ist über einen weiteren Widerstand 16 an einen Pin 17 angeschlossen, der über einen Kondensator 18 mit Masse verbunden ist. Der Pin 17 bildet den einen Eingang eines Komparators 19, der in dem integrierten Schaltkreis 7 enthalten ist und dessen Ausgangsgröße den Zündzeitpunkt des Triacs 3 und damit die Drehzahl des Motors 1, 2 bestimmt. Eine Leitung 20 verbindet den anderen Eingang des Komparators 19 mit seinem Ausgang. Zwischen der Leitung 20 und Masse ist eine Reihenschaltung aus fünf Elementen eingeschaltet, nämlich einem Widerstand 21, einer Diode 22, einem weiteren Widerstand 23, einem Potentiometer P₂ und einem Widerstand 24. Am Verbindungspunkt der Diode 22 mit dem Widerstand 23 ist der Ausgang des Komparators 13 angeschlossen. Dieser Ausgang liefert die Referenzspannung zur Einstellung des Abschaltwertes mit Hilfe des Potentiometers P₂.

Um eine Grundlage zum Verständnis der Erfindung zu schaffen, wird die Wirkungsweise der insoweit beschriebenen Schaltanordnung zunächst ohne die Erfindung wie folgt dargestellt. Dazu muß man sich vorstellen, daß - entgegen Fig. 1 - der Verbindungspunkt zwischen dem Widerstand 23 und dem Potentiometer P₂ unmittelbar mit dem zweiten Eingang 25 des Komparators 13 verbunden ist.

Zunächst wird am Potentiometer P₂ der Abschaltwert vorgewählt, zum Beispiel der 1,8fache Wert des Leerlaufstromes bei voller Drehzahl. Nach dem Einschalten der Netzspannung läuft der Motor zunächst mit kleinster Drehzahl. Der nicht dargestellte Netzschalter ist nämlich mit dem Stellglied des Potentiometers P₁ so gekoppelt, daß vor dem Ausschalten das Potentiometer auf die kleinste Drehzahlstufe zurückgestellt wird und nach dem Einschalten in gleicher Bewegungsrichtung jedesmal die gewünschte Drehzahlstufe von neuem eingestellt werden muß. Wird also das Potentiometer P₁ höher gestellt und geschieht dies schnell und bis zu einem bestimmten Endwert, so nimmt der Motor beim Hochlauf einen Strom auf, welcher den voreingestellten Abschaltwert bei weitem übersteigt. Das erfaßt der Komparator 13, dessen Eingangspotentiale einerseits vom Motorstrom (Pin 10) und andererseits, nämlich am Eingang 25, von der Stellung des Potentiometers P₂ abhängen. Übersteigt der Motorstrom den Abschaltwert, so kippt der Verstärker in eine stabile Arbeitsposition. Dadurch wird die Ausgangsspannung des Komparators 19 praktisch auf Null heruntergezogen und der Triac 3 gesperrt. Erst nach dem Ausschalten, d. h. Trennen der Schaltanordnung vom Netz, wird diese Arbeitsposition gelöscht und der normale Betrieb ist wieder möglich.

Um eine unerwünschte Abschaltung, wie sie oben beschrieben wurde, zu verhindern und den Motor nur dann abzuschalten, wenn ihm ein bestimmtes äußeres Drehmoment entgegenwirkt, ist, wie in Fig. 1 dargestellt, zwischen der Leitung 20 und dem Verbindungspunkt des Widerstandes 23 und des Potentiometers P₂ ein Differenzierglied eingeschaltet. Es besteht aus einem Kondensator C und einem Widerstand R. Außerdem ist zwischen beiden Elementen eine Diode 28 eingeschaltet und eine weitere Diode 29 gegen Masse gelegt. Diese Dioden dienen zur Entkopplung und lassen das Differenzierglied nur bei Erhöhung der Drehzahl wirksam werden. Der Verbindungspunkt zwischen dem Widerstand R und der Diode 28 ist an den Eingang 25 des Komparators 13 gelegt.

Wenn nun bei rascher Höherstellung des Potentiometers P₁ des Potential am Ausgang des Komparators 19 (Leitung 20) steigt, fließt ein Strom durch das Differenzierglied und der Spannungsabfall am Widerstand R überlagert sich dem ansonsten vorhandenen Potential am Eingang 25. Das bedeutet, daß der eingestellte Abschaltwert während der Hochlaufphase entsprechend angehoben wird, so daß es nicht zur Abschaltung kommt.

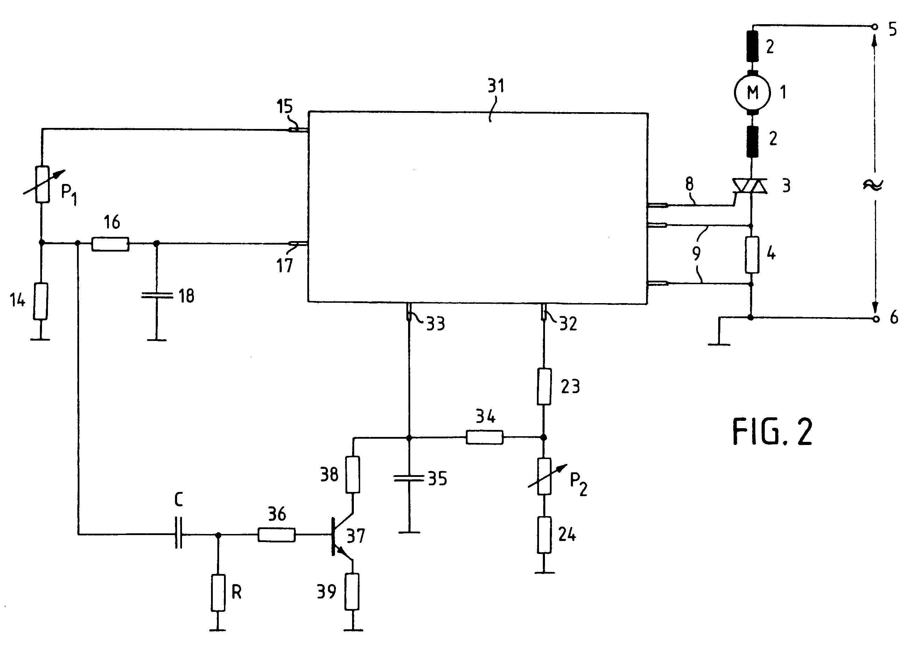

Bei dem Schaltungsbeispiel nach Fig. 2 ist im Gegensatz zu Fig. 1 ein erweiterter integrierter Schaltkreis 31 verwendet. Er enthält auch die Einrichtung zur Überlast-Abschaltung, welche u. a. den Motorstrom und den voreingestellten Abschaltwert vergleicht. Von den insgesamt sechzehn Pins dieses integrierten Schaltkreises 31 ist nur der Teil dargestellt, der im Zusammenhang mit der Erfindung Bedeutung hat. Entsprechend Fig. 1 wird der aufgenommene Strom des Motors mittels des Spannungsabfalls am Widerstand 4 über Leitungen 9 erfaßt und der Triac 3 über eine Leitung 8 angesteuert.

Ferner wiederholt sich in Fig. 2 die äußere Beschaltung des integrierten Schaltkreises 7 hinsichtlich des Potentiometers P₁. Dieses dient auch hier beim integrierten Schaltkreis 31 als Stellorgan für die Drehzahl.

Ein Pin 32 führt eine konstante Referenzspannung. Hieran ist die Reihenschaltung aus dem Widerstand 23, dem Potentiometer P₂ und dem Widerstand 24 angeschlossen. Ferner ist ein Pin 33 bezeichnet, von dem aus ein Widerstand 34 zu dem Verbindungspunkt zwischen 23 und P₂ und ein Kondensator 35 an Masse führt.

Das durch die äußere Beschaltung der Pins 32 und 33 sowie durch die Einstellung des Potentiometers P₂ bestimmte Potential des Pins 33, welches den Abschaltwert wiedergibt, wird intern im integrierten Schaltkreis 31 erfaßt, mit einem Signal, das zu dem aufgenommenen Motorstrom proportional ist, verglichen und so zur Unterbrechung der Zündimpulse für den Triac verwertet. In diesem Beispiel ist die Anordnung so getroffen, daß ein kleiner Widerstandswert des Potentiometers P₂ einem großen Abschaltwert entspricht, der Motor also ein hohes Drehmoment entwickeln kann. Das Potential des Pins 33 bezogen auf Masse ist dann verhältnismäßig klein. Eine Erhöhung des Widerstandswerts des Potentiometers P₂ bewirkt eine Erhöhung des genannten Potentials und damit ein Abschalten schon bei kleineren Motorströmen.

Die Erfindung bewirkt eine kurzzeitige Absenkung des Potentials des Pins 33 bei Drehzahlsteigerungen. Das wiederum aus dem Kondensator C und dem Widerstand R bestehende Differenzierglied ist am Potentiometer P₁ angeschlossen und steuert über einen Widerstand 36 einen Transistor 37. Dessen Kollektorkreis mit den Widerständen 38 und 39 ist an dem Pin 33 angeschlossen. Wenn also das Potentiometer P₁ in Richtung auf höhere Drehzahlen schnell verstellt wird und dementsprechend der Motor bestrebt ist, schnell hochzulaufen, fließt ein Strom durch das RC-Glied, der Transistor 37 wird leitend und das Potential des Pins 33 sinkt ab. Das aber entspricht, wie oben erwähnt einer momentanen Erhöhung des Abschaltwerts.

Der Transistor 37 hat nur die Funktion eines Inverters und ist deshalb notwendig, weil die Wirkungsrichtung des Differenziergliedes in diesem Beispiel zu der erwünschten Wirkungsrichtung entgegengesetzt ist.

| | | | |
|---|---|---|---|
| 1 | Anker | 23 | Widerstand |
| 2 | Feldwicklung | 24 | Widerstand |
| 3 | Triac | 25 | Komparatoreingang |
| 4 | Widerstand | 28 | Diode |
| 5 | Klemme | 29 | Diode |
| 6 | Klemme | 31 | integr. Schaltkreis |
| 7 | integrierter Schaltkreis | 32 | Pin |
| 8 | Leitung | 33 | Pin |
| 9 | Leitung | 34 | Widerstand |
| 10 | Pin | 35 | Kondensator |
| 11 | Widerstand | 36 | Widerstand |
| 12 | Kondensator | 37 | Transistor |
| 13 | Komparator | 38 | Widerstand |
| 14 | Widerstand | 39 | Widerstand |
| 15 | Pin | | |
| 16 | Widerstand | | |
| 17 | Pin | | |
| 18 | Kondensator | P₁ | Drehzahl-Stellorgan |
| 19 | Komparator | P₂ | Abschalt-Stellorgan |
| 20 | Leitung | C | Kondensator |
| 21 | Widerstand | R | Widerstand |
| 22 | Diode | | |

## Patentansprüche

1. Schaltanordnung zur Drehzahlsteuerung eines Reihenschlußmotors für ein handgeführtes Elektrowerkzeug, insbesondere einen Elektroschrauber, mit einem Stellorgan zum Aus- und Einschalten, einem gegebenenfalls damit kombinierten Stellorgan (P₁) für die gewünschte Drehzahl und mit einer Einrichtung zum selbsttätigen Abschalten des Motors bei Auftreten eines bestimmten Gegendrehmoments, wobei ein Stellorgan für die Vorwahl des Abschaltwerts vorgesehen ist, dadurch gekennzeichnet, daß in Abhängigkeit von der Schnelligkeit einer am Stellorgan (P₁) gewählten Drehzahlerhöhung der, z. B. an einem Potentiometer (P₂), voreingestellte Abschaltwert selbsttätig solange erhöht wird, wie der Motor zum Hochlaufen einen überhöhten Strom aufnimmt.

2. Schaltanordnung nach Anspruch 1, dadurch gekennzeichnet, daß der Abschaltwert mit Hilfe eines Differenziergliedes (R, C) verändert wird, welches ein die Drehzahl bestimmendes Steuersignal differenziert.

3. Schaltanordnung nach Anspruch 2, dadurch gekennzeichnet, daß mit Hilfe des Differenziergliedes (R, C) aus dem die Drehzahl bestimmenden Steuersignal ein Korrektursignal erzeugt wird, welches dem den Abschaltwert bestimmenden Signal im Sinne einer Erhöhung überlagert wird.

4. Schaltanordnung nach Anspruch 2, dadurch gekennzeichnet, daß mit Hilfe des Differenziergliedes (R, C) das Proportionalitätsverhältnis zwischen dem Motorstrom und dem ihn abbildenden, in der Abschalteinrichtung verwendeten Signal im Sinne der Vermeidung einer Abschaltung beim Hochlauf verändert wird.

5. Schaltanordnung nach Anspruch 2, dadurch gekennzeichnet, daß Dioden (28, 29) vorgesehen sind, welche die Wirkung des Differenziergliedes (26, 27) bei einer Drehzahlverminderung unterdrücken.

## Claims

1. Switching arrangement for controlling the speed of a series-wound motor for a hand-guided electric tool, in particular an electric screwdriver, with a control member for switching on and off, a control member (P₁ ) possibly combined therewith, for the desired speed and with a device for automatically shutting-off the motor when a certain reaction torque occurs, a control member for the preselection of the shut-off value being provided, characterised in that depending on the rapidity of a speed increase selected at the control member (P₁ ), the shut-off value preset for example at a potentiometer (P₂), is automatically increased as long as the motor receives an increased current for starting.

2. Switching arrangement according to Claim 1, characterised in that the shut-off value is varied by means of a differentiating member (R, C), which differentiates a control signal determining the speed.

3. Switching arrangement according to Claim 2, characterised in that by means of the differentiating member (R, C), a correction signal is produced from the control signal determining the speed, which correction signal is superimposed on the signal determining the shut-off value, for the purpose of an increase.

4. Switching arrangement according to Claim 2, characterised in that by means of the differentiating member (R, C), the ratio of proportionality between the motor current and the signal reproducing it, used in the shut-off device, is varied for the purpose of avoiding shutting-off at the time of starting.

5. Switching arrangement according to Claim 2, characterised in that diodes (28, 29) are provided, which suppress the action of the differentiating member (26, 27) in the case of a speed reduction.

## Revendications

1. Circuit pour commander la vitesse de rotation d'un moteur-série pour un outil électrique commandé à la main, en particulier une visseuse électrique, comportant un organe de commande pour la mise en circuit et hors circuit, un organe de commande (P1), le cas échéant combiné à celui-ci, pour la vitesse de rotation souhaitée, et un dispositif pour l'arrêt automatique du moteur lorsque se produit un contre-couple déterminé, un organe de commande pour présélectionner la valeur d'arrêt étant prévu,
caractérisé en ce que, de façon dépendant de la rapidité d'une augmentation de la vitesse de rotation choisie sur l'organe de commande (P1), la valeur d'arrêt préréglée, par exemple sur un potentiomètre (P2), est augmentée automatiquement aussi longtemps que le moteur reçoit un courant augmenté pour accélérer à pleine vitesse.

2. Circuit selon la revendication 1,
caractérisé en ce que la valeur d'arrêt est modifiée à l'aide d'un élément différenciateur (R,C), lequel différencie un signal de commande déterminant la vitesse de rotation.

3. Circuit selon la revendication 2,
caractérisé en ce que, à l'aide de l'élément différenciateur (R,C), un signal de correction est engendré à partir du signal de commande déterminant la vitesse de rotation, signal de correction qui est superposé au signal déterminant la valeur d'arrêt, dans le sens d'une augmentation.

4. Circuit selon la revendication 2,
caractérisé en ce que, à l'aide de l'élément différenciateur (R,C), le rapport de proportionalité entre le courant du moteur et le signal utilisé dans le dispositif d'arrêt, le représentant, est modifié, lors de l'accélération à pleine vitesse, dans le sens d'éviter un arrêt.

5. Circuit selon la revendication 2,
caractérisé en ce que des diodes (28,29) sont prévues, lesquelles suppriment l'effet de l'élément différenciateur (26,27) lors d'une diminution de la vitesse de rotation.
